# EUROPEAN PATENT SPECIFICATION

(11) **EP 2 208 330 B1**
(45) Date of publication and mention of the grant of the patent: **09.05.2018**
(21) Application number: 08836196.9
(22) Date of filing: 26.09.2008
(51) Int. Cl.: H04W 12/08, H04L 29/06

(54) **METHOD AND APPARATUSES FOR DETERMINING WHETHER FEMTOCELL IS AUTHORIZED TO PROVIDE WIRELESS CONNECTIVITY TO A MOBILE UNIT**
VERFAHREN UND VORRICHTUNGEN ZU BESTIMMUNG, OB EINE FEMTOZELLE ZUR BEREITSTELLUNG DRAHTLOSER KONNEKTIVITÄT FÜR EINE MOBILE EINHEIT AUTHORISIERT IST
MÉTHODE ET APPAREILS POUR FOURNIR LA CONNECTIVITÉ SANS FIL PAR UNE FEMTOCELLULE AUTORISÉE

(30) Priority: 04.10.2007 US 997580 P; 25.01.2008 US 19967
(43) Date of publication of application: 21.07.2010
(73) Proprietor: Alcatel Lucent, 91620 Nozay (FR)
(72) Inventor: MORGAN, Todd, Cartwright, Oak Park, IL 60302 (US); PATEL, Sarvar, Montville, NJ 07045 (US); SUNDARAM, Ganapathy, Subramanian, Hillsborough, NJ 08844 (US); THOMPSON, Robin, Jeffrey, Batavia, IL 60510 (US)
(74) Representative: Menzietti, Domenico
(86) International application number: PCT/US2008/011183
(87) International publication number: WO 2009/045335

(56) References cited:
- US-A1- 2007 054 668
- US-A1- 2007 183 427

## Description

### BACKGROUND OF THE INVENTION

### 1. FIELD OF THE INVENTION

This invention relates generally to communication systems, and, more particularly, to wireless communication systems.

### 2. DESCRIPTION OF THE RELATED ART

Conventional wireless communication systems use a network of base stations to provide wireless connectivity to one or more mobile units. In some cases, the mobile units may initiate wireless communication with one or more base stations in the network, e.g., when the user of the mobile unit would like to initiate a voice or data call. Alternatively, the network may initiate the wireless communication link with the mobile unit. For example, in conventional hierarchical wireless communications, a server transmits voice and/or data destined for a target mobile unit to a central element such as such as a Radio Network Controller (RNC). The RNC may then transmit paging messages to the target mobile unit via one or more base stations. The target mobile unit may establish a wireless link to one or more of the base stations in response to receiving the page from the wireless communication system. A radio resource management function within the RNC receives the voice and/or data and coordinates the radio and time resources used by the set of base stations to transmit the information to the target mobile unit. The radio resource management function can perform fine grain control to allocate and release resources for broadcast transmission over a set of base stations.

Secure communications in a conventional hierarchical system, such as a CDMA system, are established based on secret information (*e.g.,* an Authentication Key) known only to the mobile unit and a secure entity in the network. The HLR/AuC and the mobile unit may derive shared secret data (SSD) from the Authentication Key (AK), *e.g.,* using the CAVE algorithm. The AK is a 64-bit primary secret key known only to the mobile station and the HLR/AuC. This key is never shared with roaming partners. The AK may be used to generate the SSD, which is a 128-bit secondary key that can be calculated using the CAVE algorithm and can be shared with roaming partners. During authentication, the HLR/AuC and the mobile unit both calculate an Authentication Response separately and independently using shared inputs such as SSD, electronic serial number (ESN), Mobile Identity Number (MIN), and a shared Random Number (RAND). If the independently calculated results match up, then authentication is approved and the mobile unit is allowed to register with the network. Once the mobile unit is authenticated, encryption keys may be used to encrypt communication between the mobile unit and a secure entity in the CDMA system.

The AK or SSD can be used to authenticate mobile units that are registered in the network. For example, a base station may periodically generate a random number (RAND) and broadcast the RAND. Mobile units that receive the broadcast RAND compute an authentication algorithm output (AUTH) using the inputs including the RAND and the AK or SSD. The AUTH and the associated RAND (or selected portions of the RAND) are sometimes referred to as a pair. The mobile unit may then transmit the AUTH/RAND pair to the base station, which may then pass this information through the network on to the HLR/AuC. The HLR/AuC uses the authentication algorithm, the stored value of the AK or SSD, other data corresponding to each mobile unit, and the RAND to calculate the expected value of AUTH. If this value matches the value transmitted by the mobile unit, the mobile unit is authenticated. The base station frequently changes the value of RAND to ensure that the AUTH value is fresh and to reduce the possibility that previously generated AUTH/RAND results may be captured by monitoring the air interface and replayed by a fraudulent mobile unit or mobile unit emulator. This technique is considered reasonably reliable, at least in part because base stations are typically secure devices that are under the control of wireless communication providers.

A unique challenge may also be used to challenge the mobile unit. In a unique challenge, an authentication center generates a unique random number, which may be transmitted to the mobile unit. The mobile unit uses a security algorithm to calculate a unique response to the unique challenge and then transmits information indicating the value of the unique response to the authentication center. The authentication center also executes the security algorithm to generate an expected value of the unique response. If the authentication center determines that the expected value of the unique response is the same as the value provided by the mobile unit, then the mobile unit is authenticated. Otherwise, a possible security violation has occurred. Unique challenges are typically used by systems that are not capable of authenticating on system access, *e.g.,* using global challenges. Unique challenges can also be used as a backup authentication procedure if a valid exchange did not occur upon system access.

One alternative to the conventional hierarchical network architecture is a distributed architecture including a network of access points, such as base station routers, that implement distributed communication network functionality. For example, each base station router may combine RNC and/or PDSN functions in a single entity that manages radio links between one or more mobile units and an outside network, such as the Internet. Compared to hierarchical networks, distributed architectures have the potential to reduce the cost and/or complexity of deploying the network, as well as the cost and/or complexity of adding additional wireless access points, e.g. base station routers, to expand the coverage of an existing network. Distributed networks may also reduce (relative to hierarchical networks) the delays experienced by users because packet queuing delays at the RNC and PDSN of hierarchical networks may be reduced or removed.

At least in part because of the reduced cost and complexity of deploying a base station router, base station routers may be deployed in locations that are impractical for conventional base stations. For example, a base station router may be deployed in a residence or building to provide wireless connectivity to the occupants of the residents of the building. Base station routers deployed in a residence are typically referred to as home base station routers or femtocells because they are intended to provide wireless connectivity to a much smaller area (*e.g.,* a femtocell) that encompasses a residence. The functionality in a femtocell is typically quite similar to the functionality implemented in a conventional base station router that is intended to provide wireless connectivity to a macro-cell that may cover an area of approximately a few square kilometers. One important difference between a femtocell and a conventional base station router is that home base station routers are designed to be inexpensive plug-and-play devices that can be purchased off-the-shelf and easily installed by a lay person.

Conventional implementations of femtocells allow owners of the femtocells to restrict access to mobile units that are included in an access control list associated with the femtocell. For example, the femtocell owner can grant permission to the mobile unit to access the femtocell by adding the mobile unit to the access control list via a website interface. The mobile units on the access control lists can then access the wireless communication system via this femtocell. This technique may be used to prevent unknown passerby from inadvertently obtaining service from the femtocell if they are not on the access control list. However, mobile unit owners have no control over whether they are added or removed from an access control list associated with a femtocell unless they own the femtocell in question. For example, a mobile unit owner may be within range of their own femtocell as well as one or more of femtocells owned by neighbors. Although the mobile unit owner can add their mobile unit to the access control list of their own femtocell, they are not able to add or remove their mobile unit from the access control lists of the femtocells owned by their neighbors.

Femtocells are intended to be deployed in unsecured locations, such as a person's home or place of business. Consequently, femtocells are not considered trusted entities in the wireless communication system and may represent a security risk. For example, an unsecured femtocell may be hacked or reconfigured to perform "bad neighbor attacks." In a bad neighbor attack, a rogue femtocell registers a neighboring mobile unit to the rogue femtocell and then increases its signal power to overpower the neighboring femtocell. The neighboring mobile unit may elect to hand off to the rogue femtocell and establish communication, such as a telephone call, via the rogue femtocell. The owner of the rogue femtocell may then eavesdrop on the telephone call. In CDMA systems, mobile units are also susceptible to base station impersonation, but they can protect themselves by encrypting transmitted information. However, in a distributed network the femtocell is responsible for decrypting transmissions received from the mobile unit, so turning on encryption at the mobile unit does not thwart the bad neighbor attack.

One defense against the bad neighbor attack is to include a tamper-proof security chip in the femtocell. Encrypted information received from mobile units is then passed to the tamper-proof security chip for decryption and then re-encrypted before it leaves the tamper-proof security chip. In theory, the tamper-proof security chip cannot be hacked and/or modified by a rogue user. Unfortunately, femtocells are intended to be very low cost devices and so they do not typically include expensive security chips for storing information that can be used to establish secure communications between the femtocell and mobile units. Consequently, every individual who purchases a conventional femtocell has the ability to impersonate the network to the world.

US 2007/0054668 A1 discloses a private base station configured to connect to the Internet and establish a small area of wireless coverage includes an exclusivity database allowing registered mobile phones to use services within the cell and not allowing use of the services by unregistered mobile phones.

3GPP TS 33.102 V7.1.0 (2006-12) defines a security architecture for third generation mobile telecommunication systems. The document describes security features and network access security mechanisms such as identification, local authentication and connection establishment, access link data integrity, assess link data confidentiality and interoperation and handover between UMTS and GSM.

### SUMMARY OF THE INVENTION

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.
The present invention provides a method according to claim 1, a secure entity according to claim 8 and a wireless communication system according to claim 11. In one embodiment of the present invention, a method is provided involving a femtocell in communication with a secure network. The method includes determining whether the femtocell is authorized to provide wireless connectivity to a mobile unit based on information stored in a secure entity in the secure network. The information has been confirmed by a user of the mobile unit.

In another embodiment of the present invention, a method of operating a femtocell in communication with a secure network is provided. The method includes providing, from the femtocell to a secure entity in the secure network, a request to provide wireless connectivity to a mobile unit. The method also includes receiving permission to provide wireless connectivity to the mobile unit when information stored in the secure entity in the secure network indicates that a user of the mobile unit has confirmed that the femtocell is authorized to provide wireless connectivity to the mobile unit.

In another embodiment of the present invention, a method of operating a mobile unit is provided. The method involves a femtocell in communication with a secure network. The method includes providing, from the mobile unit to a secure entity in the secure network, information indicating whether the femtocell is authorized to provide wireless connectivity to the mobile unit.

### BRIEF DESCRIPTION OF THE DRAWINGS

The invention may be understood by reference to the following description taken in conjunction with the accompanying drawings, in which like reference numerals identify like elements, and in which:
Figure 1 conceptually illustrates a first exemplary embodiment of a wireless communication system, in accordance with one embodiment of the present invention;
Figure 2 conceptually illustrates a second exemplary embodiment of a wireless communication system, in accordance with one embodiment of the present invention;
Figure 3 conceptually illustrates one exemplary embodiment of a method of controlling access to a mobile unit, in accordance with one embodiment of the present invention; and
Figure 4 conceptually illustrates one exemplary embodiment of a method of confirming a request to modify an access control list to include a mobile unit, in accordance with one embodiment of the present invention.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The present invention will now be described with reference to the attached figures. Various structures, systems and devices are schematically depicted in the drawings for purposes of explanation only and so as to not obscure the present invention with details that are well known to those skilled in the art. Nevertheless, the attached drawings are included to describe and explain illustrative examples of the present invention. The words and phrases used herein should be understood and interpreted to have a meaning consistent with the understanding of those words and phrases by those skilled in the relevant art. No special definition of a term or phrase, *i.e.,* a definition that is different from the ordinary and customary meaning as understood by those skilled in the art, is intended to be implied by consistent usage of the term or phrase herein. To the extent that a term or phrase is intended to have a special meaning, *i.e.,* a meaning other than that understood by skilled artisans, such a special definition will be expressly set forth in the specification in a definitional manner that directly and unequivocally provides the special definition for the term or phrase.

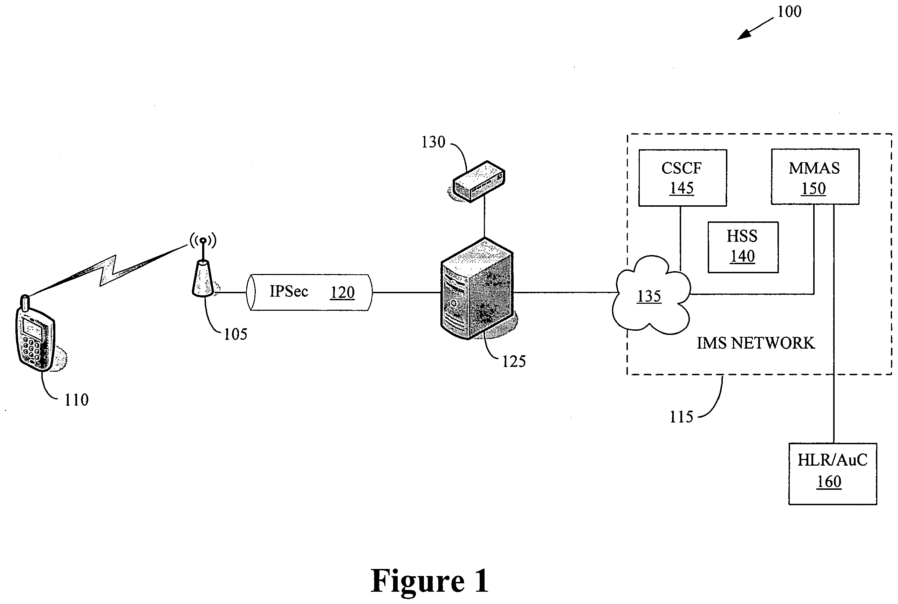

Figure 1 conceptually illustrates a first exemplary embodiment of a wireless communication system 100. In the illustrated embodiment, the wireless communication system 100 includes one or more femtocells 105 for providing wireless connectivity. The femtocells 105 may provide wireless connectivity according to standards and/or protocols including, but not limited to, Code Division Multiple Access (CDMA) standards and/or protocols, Universal Mobile Telecommunication Services (UMTS) standards and/or protocols, Global System for Mobile communication (GSM) standards and/or protocols, WiMAX standards and/or protocols, IEEE standards and/or protocols, and the like. Furthermore, persons of ordinary skill in the art having benefit of the present disclosure should appreciate that the present invention is not limited to using femtocells 105 to provide wireless connectivity. In alternative embodiments, devices such as base stations, base station routers, access points, access networks, and the like may be used to provide wireless connectivity in the wireless communication system 100.

The femtocell 105 is intended to provide wireless coverage to an area that approximately encompasses a building that includes one or more mobile units 110 that are granted access to the femtocell 105. The mobile units 110 may be registered with the femtocell 105 using a variety of techniques including having a user enter an International Mobile Subscriber Identity (IMSI) for the registered mobile units 110 via a webpage, using a handshaking protocol between the mobile units 110 and the femtocell 105, and the like. A list of the registered mobile units 110 is then made available to the femtocell 105. In one embodiment, the femtocell 105 contains a database including the IMSI values for the registered mobile units 110. In the illustrated embodiment, the mobile unit 110 is a code division multiple access (CDMA)-based wireless mobile unit 110. However, persons of ordinary skill in the art having benefit of the present disclosure should appreciate that the present invention is not limited to CDMA-based mobile units 110.

The femtocell 105 provides access to the wireless communication system 100 via a network such as an Internet Protocol Multimedia Subsystem (IMS) network 115 (indicated by the dashed box). In various alternative embodiments the femtocell 105 may be coupled to the IMS network 115 by a variety of functional elements. For example, in Figure 1 the femtocell 105 is communicatively coupled to a femto network gateway 125. An Operations Administration and Maintenance (OA & M) server 130 may be coupled to the femto network gateway 125 and may be used to establish communications between the femtocell 105 and an Internet Protocol (IP) network 135 via the femto network gateway (FNG) 125. The femtocell 105 may communicate with the femto network gateway 125 using a secure and/or trusted connection. For example, an IPSec tunnel 120 may be formed between the femtocell 105 and the femto network gateway 125. However, persons of ordinary skill in the art having benefit of the present disclosure should appreciate that this exemplary embodiment is not intended to limit the present invention to this particular network architecture.

The IMS network 115 is a Session Initiation Protocol (SIP) based network that supports communication over the internet by many types of handsets. For example, these handsets (such as the mobile unit 110 combined with the femtocell 105) may use Voice over Internet Protocol (VoIP) and other methods to transfer data and voice in real time applications across the IP network 135. The IMS network 115 includes a Home Subscriber Server (HSS) 140, which is a master user database that supports the IMS network entities that handle calls. The HSS 140 may contain subscription-related information (user profiles), perform authentication and authorization of the user, and can provide information about the user's physical location. The IMS network 115 may also include one or more Call Session Control Function (CSCF) entities 145 that are used to process SIP signaling packets in the IMS network 115. Although the CSCF entities 145 are shown as a single functional block in Figure 1, persons of ordinary skill in the art having benefit of the present disclosure should appreciate that the CSCF entities 145 may include multiple entities such as a serving CSCF, a proxy CSCF, an interrogating CSCF, and the like, which may be implemented in one or more other functional and/or physical entities. A Mobility Management Application Server (MMAS) 150 is used to coordinate and manage functions related to the mobility of the mobile units 110.

The elements of the IMS network 115 are considered secure and/or trusted elements of the wireless communication system 100 at least in part because they may be under the control of the service provider. For example, the MMAS 150 may be physically secure because it is located in a building that is under the control of the service provider. Consequently, the service provider may be able to ensure that the MMAS 150 cannot be accessed by an unauthorized user who may attempt to modify or hack the femtocell 105. Furthermore, the MMAS 150 may be protected from hacking using firewall protection, virus protection, and the like, which may prevent unauthorized access to the MMAS 150. Other entities in the network, such as the femto network gateway (FNG) 125 and a home location register/authentication center (HLR/AuC) 160 that is used to generate and provide one or more keys to the femtocell 105 and/or the mobile unit 110, may also be considered relatively trusted and/or secure because they are under the control of a service provider.

However, the femtocell 105 may not be a trusted element of the wireless communication system 100. For example, the femtocell 105 may not be physically secure because it may be located in a user's residence or place of business. Consequently, the service provider may not be able to ensure that the femtocell 105 cannot be accessed by an unauthorized user who may attempt to modify or hack the femtocell 105. Furthermore, the femtocell 105 may be susceptible to hacking over a network. For example, the user of the femtocell 105 may not provide sufficient firewall protection, virus protection, and the like, which may permit unauthorized users to hack into the femtocell 105. Since the femtocell 105 is not a trusted element of the system 100, femtocells 105 may be modified and/or hacked. For example, insecure and/or un-trusted femtocells 105 may be modified to perform "bad neighbor" attacks that allow the hacked femtocell 105 to eavesdrop on private conversations.

Trusted and/or secure entities within (or securely coupled to) the IMS network 115 may be used to implement strong, network-enforced access control. In the illustrated embodiment, strong, network-enforced access control is implemented in the femto network gateway 125. However, persons of ordinary skill in the art having benefit of the present disclosure should appreciate that some or all of the access control enforcement techniques and/or algorithms described herein may be implemented in any secure location or combination of secure locations within the wireless communication system 100. The strong, network-enforced access control technique described herein gives users of mobile units 110 the ability to confirm or reject any attempt to permit a femtocell 105 to provide wireless connectivity to the mobile unit 110. The mobile unit confirmations are maintained in a secure database, such as an access control list, which is stored in a secure location such as the femto network gateway 125. The secure database is managed to prevent unauthorized modifications by rogue femtocells 105. For example, when an attempt is made to modify the access control list associated with a femtocell 105, the identity of the femtocell 105 is verified and confirmation of the attempted modification is solicited from the affected mobile unit 110. The access control list may be modified if the user of the mobile unit 110 confirms the attempted modification and the identity of the femtocell 105 is verified. However, the modification to the access control list may not be permitted if the user of the mobile unit 110 does not confirm or approve the attempted modification and/or if the identity of the femtocell 105 is not verified.

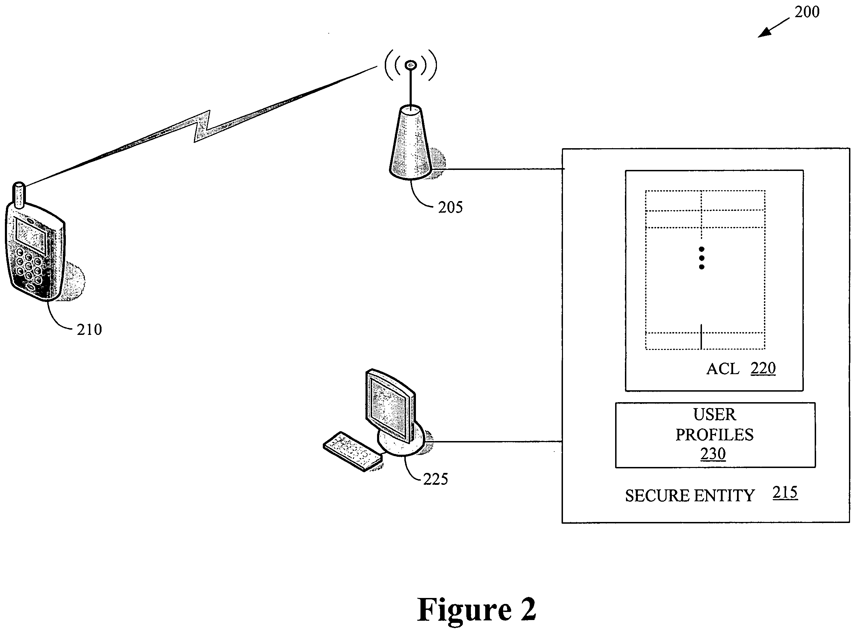

Figure 2 conceptually illustrates a second exemplary embodiment of a wireless communication system 200. Persons of ordinary skill in the art having benefit of the present disclosure should appreciate that the second exemplary embodiment of the wireless communication system 200 may represent a more detailed view of portions of the first exemplary embodiment of the wireless communication system 100 shown in Figure 1. However, the second exemplary embodiment could alternatively be a part of a different wireless communication system. Moreover, persons of ordinary skill in the art having benefit of the present disclosure should appreciate that the second exemplary embodiment of the wireless communication system 200 is intended to be illustrative and not to limit the present invention.

In the illustrated embodiment, the wireless communication system 200 includes one or more femtocells 205 for providing wireless connectivity to one or more mobile units 210. The wireless communication system 200 also includes a secure entity 215 that is used to implement strong, network-enforced access control. The secure entity 215 maintains a database or access control list (ACL) 220 that includes a list of the confirmed associations between mobile units 210 and femtocells 205. The wireless communication system 200 also includes one or more interfaces 225 that may be used to provide information to the secure entity 215. For example, authorized users may provide information that can be used to modify the access control list 220. The secure entity 215 may then use the access control list 220, as well as information provided by the femtocell 205, the mobile unit 210, and/or the interface 225 to control network access so that femtocells 205 are only permitted to provide wireless connectivity to mobile units 210 that have authorized the femtocell 205 to provide connectivity, as indicated by entries in the access control list 220.

The access control list 220 can be modified when a femtocell 205 first attempts to provide wireless connectivity to the mobile unit 210. For example, the owner of a femtocell 205 may attempt to add the mobile unit 210 to the list of permitted mobile units in the access control list 220. The request to add the mobile unit 210 may be provided directly from the femtocell 205 to the secure entity 215 or may alternatively be provided via the interface 225. In response to receiving the request to add the mobile unit 210 to the list of permitted mobile units, the secure entity 215 may solicit user permission to modify the access control list 220 to indicate that the femtocell 205 is permitted to provide wireless connectivity to the mobile unit 210. The modification of the access control list 220 (either by addition or removal of an association between the mobile unit 210 and the femtocell 205) is only performed if the user of the mobile unit 210 grants permission. The access control list 220 is not modified in response to the request from the femtocell 205 if the user denies permission.

Numerous methods for granting or denying permission to modify the access control list 220 may be used. For one example, the user of the mobile unit 210 may provide secret information, such as a password, to the femtocell 205, which may then forward the secret information to the secure entity 215. If the secret information is the same as secret information stored on the secure entity 215, then permission to modify the access control list 220 is considered to be granted. For another example, the secure entity 215 may transmit a password to the mobile unit 210 via a text message or a Short Message System (SMS) message. If the owner of the mobile unit wants to grant permission to modify the access control list 220, the provided password may be relayed to the femtocell 205 owner, who may relay this password to the secure entity 215 via the interface 225

A request to modify the access control list 220 and/or to grant permission to modify the access control lists 220 may also be initiated by the user of the mobile unit 210. In one embodiment, the user of the mobile unit 210 may use the interface 225 to modify the access control list 220. For example, the interface 225 may be used to access a website that provides tools for modifying the permissions associated with the mobile unit 220. User authorization may be confirmed using a user identifier (such as a phone number or a username selected by the user) and a password that is known only to the user and the secure entity 215. Initially, the password can be communicated to the user by the service provider, e.g., the password could be the three digits that follow the phone number on a typical phone bill. Alternatively, the secure entity 215 may transmit the password to the mobile unit 210 via a text message. The website may also allow authorized users to modify the username and/or password. In one embodiment, the user can view a list of all the femtocells 205 that have added (or have attempted to add) the mobile unit 210 to their corresponding access control list 220. The user may then elect to grant or decline permissions to one or more of the femtocells 205 indicated in the list.

A user of the mobile unit 210 may be able to remove previously granted permissions. For example, the user of the mobile unit 210 may elect to add the femtocell 205 to its access control list 220 if the user expects to be near the femtocell 205 for a selected period of time. However, once the user of the mobile unit 210 leaves the vicinity of the femtocell 205, the user may elect to remove the femtocell 205 from its access control list 220. In one embodiment, the user may also pre-authorize particular femtocells 205 even though the femtocell 205 has not yet attempted to add the mobile unit 210 to its access control list 220. The mobile unit 210 may then be added to the appropriate access control lists 220 without further input from the user when the femtocell 205 requests permission to provide wireless connectivity to the mobile unit 210.

The algorithms that are used to solicit and/or receive confirmation from the user of the mobile unit 210 may be established based upon a user profile. For example, the secure entity 215 may store user profiles for the mobile unit 210 that indicate default permissions associated with the mobile unit 210. The user profile may indicate the preferred actions that should be taken when an attempt is made to modify the access control list 220 entries for the mobile unit 210, e.g., when the femtocell 205 attempts to add the mobile unit 210 to its access control list 220. For example, the user may not want to be interrupted each time a femtocell 205 attempts that the mobile unit 210 so the user profile may indicate that all attempts to modify the access control lists 220 associated with the mobile unit 210 are permitted. For another example, the user profile may indicate that user confirmation is required for all attempts to modify the access control lists 220 associated with the mobile unit 210. For yet another example, the user profile may indicate specific conditions under which a femtocell 205 or a group of femtocells 205 is permitted to modify the access control lists 220 without explicit confirmation from the user and other conditions under which confirmation is required.

In the illustrated embodiment, the secure entity 215 is responsible for enforcing the access control list 220. For example, the secure entity 215 is responsible for making sure that user confirmation is received for any attempted modifications of the access control lists 220. The secure entity 215 is also responsible for ensuring that femtocells 205 do not provide wireless connectivity to mobile units 210 that are not included in the corresponding access control lists 220. In one embodiment, the secure entity 215 enforces the permissions indicated in the access control lists 220 by monitoring communications received from the femtocells 205 and only permitting those communications that are allowed by confirmed entries in the access control lists 220. In some cases, only part of the communications may need to be checked against the access control lists 220. For example, the secure entity 215 can check the access control lists 220 when CDMA authentication checks are performed. If the message is inconsistent with the access control lists 220, then it is rejected.

The secure entity 215 also validates the identity of the femtocell 205 to ensure that the appropriate access control list 220 is used to police communication from the femtocell 205. Thus, the femtocell 205 should be configured so that its identifier cannot be changed. In one embodiment, the femtocell identifier is provided to the secure entity 215 so that the secure entity 215 can verify that the proper femtocell identifier has been received. In one embodiment, validation of the femtocell identifier may be performed at the femto network gateway (such as the FNG 125 shown in Figure 1) since this is the next hop from the femtocell 205 and a secure association (such as an IPSec tunnel) may exist between the femtocell 205 and the femto network gateway. However, persons of ordinary skill in the art having benefit of the present disclosure should appreciate that the present invention is not limited to performing femtocell identifier validation and/or verification at the femto network gateway. In alternative embodiments, other secure entities in the network may be used for femtocell identifier validation and/or verification.

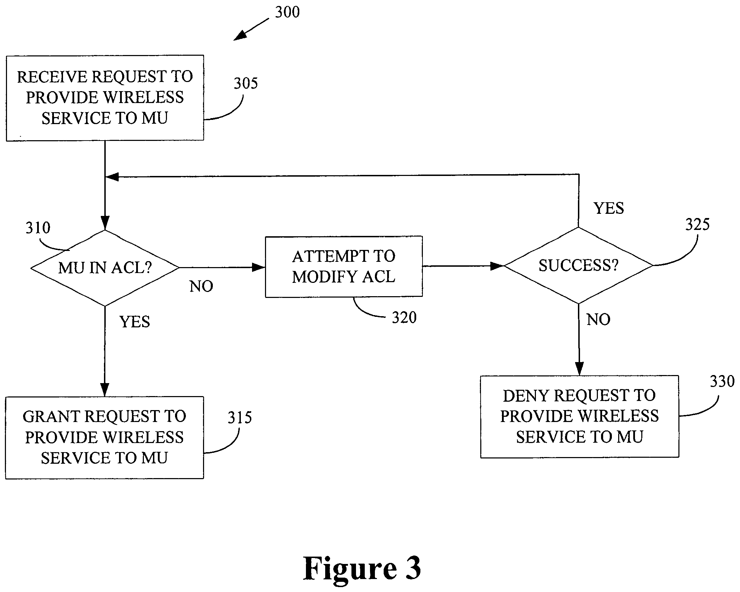

Figure 3 conceptually illustrates one exemplary embodiment of a method 300 of controlling access to a mobile unit. In the illustrated embodiment, a secure entity within the network receives (at 305) a request to provide wireless service to mobile unit. The secure entity then determines (at 310) whether the mobile unit is listed in a confirmed entry in the access control list associated with the femtocell that is attempting to provide the wireless service. If the mobile unit is listed in the access control list and this entry has been confirmed by the user of the mobile unit, then the secure entity may grant (at 315) the request to provide wireless service to the mobile unit. However, if the mobile unit is not listed in the access control list and/or if an existing entry has not been confirmed by the user of the mobile unit, then the secure entity may attempt (at 320) to modify the access control list to allow the requesting femtocell to provide wireless connectivity to the mobile unit. If the attempt (at 320) is successful (at 325), then the secure entity may proceed with verifying (at 310) that the mobile unit is in the access control list. However, if the attempt (at 320 is not successful (at 325), then the secure entity may deny (at 330) the request to provide wireless service to the mobile unit.

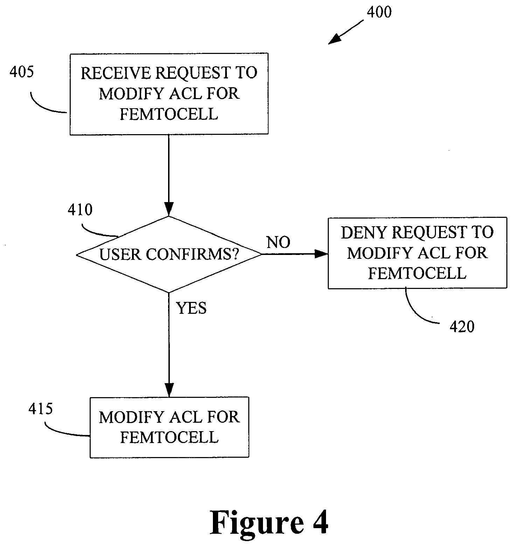

Figure 4 conceptually illustrates one exemplary embodiment of a method 400 of confirming a request to modify an access control list to include a mobile unit. In the illustrated embodiment, a secure entity within the network receives (at 405) a request to modify an access control list associated with a femtocell. The request may indicate that an owner of the femtocell wants to add the mobile units to the access control lists or remove the mobile unit from the access control list. The secure entity may then solicit confirmation of the request from a user of the mobile unit and then determines (at 410) whether or not the user has confirmed or approved the request to modify the access control list by adding or removing the mobile unit. If the user of the mobile unit confirms the request, then the access control list for the femtocell may be modified (at 415) by adding or removing the mobile unit. If the user of the mobile unit does not confirm the request to modify the access control list, then the secure entity may deny (at 420) the request to modify the access control list for the femtocell.

Portions of the present invention and corresponding detailed description are presented in terms of software, or algorithms and symbolic representations of operations on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Note also that the software implemented aspects of the invention are typically encoded on some form of program storage medium or implemented over some type of transmission medium. The program storage medium may be magnetic (e.g., a floppy disk or a hard drive) or optical (e.g., a compact disk read only memory, or "CD ROM"), and may be read only or random access. Similarly, the transmission medium may be twisted wire pairs, coaxial cable, optical fiber, or some other suitable transmission medium known to the art. The invention is not limited by these aspects of any given implementation.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope of the invention. Accordingly, the protection sought herein is as set forth in the claims below.

## Claims

1. A method of operating a femtocell (105, 205) in communication with a secure network (115), the method comprising the steps of:
providing (305, 405) from the femtocell (105, 205) to a secure entity (125, 215) in the secure network (1 15), a request to provide wireless connectivity to a mobile unit (110, 210); and
receiving (315) permission to provide wireless connectivity to the mobile unit (110, 210) when information stored in the secure entity (125, 215) in the secure network (115) indicates that a user of the mobile unit (110, 210) has confirmed that the femtocell (105, 205) is authorized to provide wireless connectivity to the mobile unit (110, 210);
the request to provide wireless connectivity to the mobile unit (110, 210) comprises providing a request to modify a list of mobile units (220) associated with the femtocell (105, 205) to add or remove the mobile unit (1 10, 210);
**characterized in that** the request to provide wireless connectivity comprises the substeps of:
providing, to the mobile unit (110, 210), a request to add the mobile unit (110, 210) to the list of mobile units (220) associated with the femtocell (105 , 205);
receiving, from the mobile unit (110, 210), information indicating whether the mobile unit (110, 210) confirms addition to the list of mobile units (220) associated with the femtocell
(105, 205); and
providing, to the secure entity (125, 215), the information indicating whether the mobile unit (110, 210) confirms addition to the list of mobile units (220) associated with the femtocell (105, 205) such that the list is modified if the user of the mobile unit (110, 210) confirms the addition or removal.

2. The method of claim 1, wherein the method further comprising the step of determining (325, 410) whether the femtocell (105, 205) is authorized to provide wireless connectivity to the mobile unit (110, 210) is based on the information stored in the secure entity (125, 215) in the secure network and wherein the determining (325, 410) whether the femtocell (105. 205) is authorized to provide wireless connectivity to the mobile unit (110, 210) comprises determining whether the femtocell (105, 205) is authorized to provide wireless connectivity to the mobile unit (110, 210) is based on a list of mobile units (220) associated with the femtocell (105, 205).

3. The method of claim 2, comprising:
modifying (320, 415) the list of mobile units (220) associated with the femtocell (105, 205) to add or remove the mobile unit (110, 210) if the user of the mobile unit (110, 210) confirms the additional or removal; and
receiving (410) a confirmation of the addition or removal from the user of the mobile unit (110, 210) via at least one of the mobile unit (110, 210), the femtocell (105, 205), or an interface (225) provided by the secure entity (125, 215).

4. The method of claim 1, further comprising:
receiving (305, 405) the request from the femtocell (105, 205) to modify the information stored in the secure entity (125, 215) to add or remove the mobile unit (110, 210), the request including an identifier associated with the femtocell (105, 205);
validating (310, 410) the identifier associated with the femtocell (105, 205);
granting (315, 415) the request and modifying the information stored in the secure entity (125, 215) when the identifier is validated; and
denying (330, 420) the request and not modifying the information stored in the secure entity (125, 215) when the identifier is not validated.

5. The method of claim 1, comprising receiving, at the mobile unit (110, 210), information indicating an attempt to add or remove the mobile unit (110, 210) from a list of mobile units (220) associated with the femtocell (105, 205).

6. The method of claim 5, wherein providing the information indicating whether the femtocell (105, 205) is authorized to provide wireless connectivity to the mobile unit (110, 210) comprises providing the information in response to receiving the information indicating the attempt to add or remove the mobile unit (110, 210) from the list of mobile units (220) associated with the femtocell (105, 205) and wherein providing the information indicating whether the femtocell (105, 205) is authorized to provide wireless connectivity to the mobile unit (110, 210) comprises providing secret information known only to the user and the secure entity (125, 215).

7. The method of claim 1, wherein the list is an access control list and wherein the method further comprises the steps of:
determining (310) at the secure entity (125, 215) whether the mobile unit (110, 210) is listed in a confirmed entry in an access control list associated with the femtocell that is attempting to provide the wireless connectivity;
granting (315) at the secure entity (125, 215) the request to provide wireless connectivity, if the mobile unit (110, 210) is listed in the access control list and the entry has been confirmed by a user of the mobile unit (110, 210);
attempting (320) by the secure entity (125, 215) to modify the access control list to allow the requesting femtocell (105, 205) to provide the wireless connectivity, if the mobile unit (110, 210) is not listed in the access control list and/or if an existing entry has not been confirmed by the user of the mobile unit (110, 210);
proceeding at the secure entity (125, 215) with the determining step (310), that the mobile unit (110, 210) is in the access control list; and
denying (330) at the secure entity (125, 215) the request to provide wireless connectivity, if the attempting step (320) is not successful (325).

8. A secure entity (125, 215) for use in a secure network (115), the secure entity (125, 215) is adapted to
receive a request from a femtocell (105, 205) to provide wireless connectivity to a mobile unit (110, 210); and
determine whether the femtocell (105, 205) is authorized to provide wireless connectivity to the mobile unit (110, 210) based on information stored in the secure entity (125, 215) in the secure network, said information having been confirmed by a user of the mobile unit (110, 210);
the request to provide wireless connectivity to the mobile unit (110, 210) comprises providing a request to modify a list of mobile units (220) associated with the femtocell (105, 205) to add or remove the mobile unit (110, 210);
**characterized in that** the secure entity (125, 215) is further adapted to:
provide, to the mobile unit (110, 210), a request to add the mobile unit (110, 210) to the list of mobile units (220) associated with the femtocell (105, 205); and
receive, from the mobile unit (110, 210), information indicating whether the mobile unit (110, 210) confirms addition to the list of mobile units (220) associated with the femtocell (105, 205) such that the list is modified if the user of the mobile unit (110, 210) confirms the addition or removal.

9. The secure entity (125, 215) of claim 8, wherein the secure entity (125, 215) is further adapted to
determine whether the mobile unit (110, 210) is listed in a confirmed entry in an access control list (220) associated with the femtocell (105, 205) that is attempting to provide the wireless service and
grant the request to provide wireless service to the mobile unit (110, 210), if the mobile unit (110, 210) is listed in the access control list (220) and the mobile unit entry has been confirmed by the user of the mobile unit (110, 210).

10. The secure entity (125) of claim 8, wherein the secure entity (125) is a femto network gateway.

11. A wireless communication system (200) comprising:
at least one femtocell (205) for providing wireless connectivity to at least one mobile unit (210) and
a secure entity (215) according to claim 8 used to implement strong, network-enforced access control.

## Patentansprüche

1. Verfahren zum Betreiben einer Femtozelle (105, 205) in Kommunikation mit einem sicheren Netzwerk (115), wobei das Verfahren die folgenden Schritte umfasst:
Bereitstellen (305, 405) von der Femtozelle (105, 205) für eine sichere Entität (125, 215) in dem sicheren Netzwerk (115), einer Anforderung zum Bereitstellen einer drahtlosen Konnektivität mit einer mobilen Einheit (110, 210); und
Empfangen (315) einer Erlaubnis zum Bereitstellen drahtloser Konnektivität mit der mobilen Einheit (110, 210), wenn in der sicheren Entität (125, 215) gespeicherte Information in dem sicheren Netzwerk (115) anzeigt, dass ein Benutzer der mobilen Einheit (110, 210) bestätigt hat, dass die Femtozelle (105, 205) autorisiert ist, drahtlose Konnektivität bereitzustellen für die mobile Einheit (110, 210);
wobei die Anforderung, drahtlose Konnektivität für die mobile Einheit (110, 210) bereitzustellen, umfasst das Bereitstellen einer Anforderung zum Modifizieren einer Liste mobiler Einheiten (220), die verbunden sind mit der Femtozelle (105, 205) zum Hinzufügen oder Entfernen der mobilen Einheit (110, 210);
**dadurch gekennzeichnet, dass** die Anforderung zum Bereitstellen drahtloser Konnektivität die folgenden Unterschritte umfasst:
Bereitstellen, für die mobile Einheit (110, 210), einer Anforderung zum Hinzufügen der mobilen Einheit (110, 210) zur Liste mobiler Einheiten (220), die mit der Femtozelle (105, 205) verbunden sind;
Empfangen, von der mobilen Einheit (110, 210), von Information, die anzeigt, ob die mobile Einheit (110, 210) das Hinzufügen zu der Liste mobiler Einheiten (220), die mit der Femtozelle
(105, 205) verbunden sind, bestätigt; und
Bereitstellen, für die sichere Einheit (125, 215), der Information, die anzeigt, ob die mobile Einheit (110, 210) das Hinzufügen zur Liste der mobilen Einheiten (220) bestätigt, die mit der Femtozelle (105, 205) verbunden sind, sodass die Liste modifiziert wird, wenn der Benutzer der mobilen Einheit (110, 210) das Hinzufügen oder Entfernen bestätigt.

2. Verfahren nach Anspruch 1, wobei das Verfahren weiterhin umfasst den Schritt des Bestimmens (325, 410), ob die Femtozelle (105, 205) autorisiert ist, drahtlose Konnektivität für die mobile Einheit (110, 210) bereitzustellen, basiert auf der Information, die in der sicheren Entität (125, 215) in dem sicheren Netzwerk gespeichert ist, und wobei das Bestimmen (325, 410), ob die Femtozelle (105, 205) autorisiert ist zum Bereitstellen drahtloser Konnektivität für die mobile Einheit (110, 210), umfasst das Bestimmen, ob die Femtozelle (105, 205) autorisiert ist zum Bereitstellen drahtloser Konnektivität für die mobile Einheit (110, 210) auf Grundlage einer Liste mobiler Einheiten (220), die mit der Femtozelle (105, 205) verbunden sind.

3. Das Verfahren nach Anspruch 2, umfassend:
Modifizieren (320, 415) der Liste von mobilen Einheiten (220), die verbunden sind mit der Femtozelle (105, 205), zum Hinzufügen oder Entfernen der mobilen Einheit (110, 210), wenn der Benutzer der mobilen Einheit (110, 210) das Hinzufügen oder Entfernen bestätigt; und
Empfangen (410) einer Bestätigung des Hinzufügens oder Entfernens des Benutzers der mobilen Einheit (110, 210) über mindestens eins aus mobile Einheit (110, 210), Femtozelle (105, 205) oder Schnittstelle (225), die von der sicheren Entität (125, 215) bereitgestellt wird.

4. Verfahren nach Anspruch 1, weiterhin umfassend:
Empfangen (305, 405) der Anforderung von der Femtozelle (105, 205) zum Modifizieren der in der sicheren Entität (125, 215) gespeicherten Information zum Hinzufügen oder Entfernen der mobilen Einheit (110, 210), wobei die Anforderung einschließt eine Kennung, die verbunden ist mit der Femtozelle (105, 205);
Validieren (310, 410) der Kennung, die mit der Femtozelle (105, 205) verbunden ist;
Gewähren (315, 415) der Anforderung und Modifizieren der in der sicheren Entität (125, 215) gespeicherten Information, wenn die Kennung validiert wird; und
Verweigern (330, 420) der Anforderung und nicht Modifizieren der in der sicheren Entität (125, 215) gespeicherten Information, wenn die Kennung nicht validiert wird.

5. Verfahren nach Anspruch 1, umfassend das Empfangen, an der mobilen Einheit (110, 210), einer Information, die einen Versuch anzeigt, die mobile Einheit (110, 210) zur Liste mobiler Einheiten (220) hinzuzufügen oder daraus zu entfernen, die mit der Femtozelle (105, 205) verbunden sind.

6. Verfahren nach Anspruch 5, wobei das Bereitstellen der Information, die anzeigt, ob die Femtozelle (105, 205) autorisiert ist zum Bereitstellen drahtloser Konnektivität für die mobile Einheit (110, 210), umfasst das Bereitstellen von Information als Antwort auf das Empfangen von Information, die den Versuch anzeigt, die mobile Einheit (110, 210) zur Liste der mobilen Einheiten (220) hinzuzufügen oder daraus zu entfernen, die mit der Femtozelle (105, 205) verbunden sind, und wobei das Bereitstellen der Information, die anzeigt, ob die Femtozelle (105, 205) autorisiert ist zum Bereitstellen drahtloser Konnektivität für die mobile Einheit (110, 210), umfasst das Bereitstellen geheimer Information, die nur dem Benutzer und der sicheren Entität (125, 215) bekannt ist.

7. Verfahren nach Anspruch 1, wobei die Liste eine Zugangskontrollliste ist und wobei das Verfahren weiterhin die folgenden Schritte umfasst:
Bestimmen (310), an der sicheren Entität (125, 215), ob die mobile Einheit (110, 210) in dem bestätigten Eintrag in einer Zugangskontrollliste aufgeführt ist die mit der Femtozelle verbunen ist, die versucht, die drahtlose Konnektivität bereitzustellen;
Gewähren (315), an der sicheren Entität (125, 215), der Anforderung zum Bereitstellen drahtloser Konnektivität, wenn die mobile Einheit (110, 210) in der Zugangskontrollliste aufgeführt ist und der Eintrag bestätigt worden ist von einem Benutzer der mobilen Einheit (110, 210);
Versuchen (320), durch die sichere Entität (125, 215), die Zugangskontrollliste zu modifizieren, um der anfordernden Femtozelle (105, 205) zu gestatten, drahtlose Konnektivität bereitzustellen, wenn die mobile Einheit (110, 210) nicht in der Zugangskontrollliste aufgeführt ist und/oder wenn ein existierender Eintrag nicht bestätigt worden ist von dem Benutzer der mobilen Einheit (110, 210);
Fortfahren an der sicheren Entität (125 215) mit dem Bestimmungsschritt (310), ob die mobile Einheit (110, 210) in der Zugangskontrollliste ist; und
Verweigern (330), an der sicheren Entität (125, 215), der Anforderung zum Bereitstellen drahtloser Konnektivität, wenn der Versuchsschritt (320) nicht erfolgreich ist (325).

8. Sichere Entität (125, 215) zum Gebrauch in einem sicheren Netzwerk (115), wobei die sichere Entität (125, 215) ausgelegt ist zum
Empfangen einer Anforderung von einer Femtozelle (105, 205) zum Bereitstellen drahtloser Konnektivität für eine mobile Einheit (110, 210); und
Bestimmen, ob die Femtozelle (105, 205) autorisiert ist zum Bereitstellen drahtloser Konnektivität für die mobile Einheit (110, 210) auf Grundlage von Information, die in der sicheren Entität (125, 215) in dem sicheren Netzwerk gespeichert ist, wobei besagte Information bestätigt worden ist von einem Benutzer der mobilen Einheit (110, 210);
wobei die Anforderung, drahtlose Konnektivität für die mobile Einheit (110, 210) bereitzustellen, umfasst das Bereitstellen einer Anforderung zum Modifizieren einer Liste mobiler Einheiten (220), die verbunden sind mit der Femtozelle (105, 205) zum Hinzufügen oder Entfernen der mobilen Einheit (110, 210);
**dadurch gekennzeichnet, dass** die sichere Entität (125, 215) weiterhin ausgelegt ist zum:
Bereitstellen, für die mobile Einheit (110, 210), einer Anforderung zum Hinzufügen der mobilen Einheit (110, 210) zur Liste mobiler Einheiten (220), die mit der Femtozelle (105, 205) verbunden sind; und
Empfangen, von der mobilen Einheit (110, 210), der Information, die anzeigt, ob die mobile Einheit (110, 210) das Hinzufügen zur Liste der mobilen Einheiten (220) bestätigt, die mit der Femtozelle (105, 205) verbunden sind, sodass die Liste modifiziert wird, wenn der Benutzer der mobilen Einheit (110, 210) das Hinzufügen oder Entfernen bestätigt.

9. Sichere Entität (125, 215) nach Anspruch 8, wobei die sichere Entität (125, 215) weiterhin ausgelegt ist zum
Bestimmen, ob die mobile Einheit (110, 210) in einem bestätigten Eintrag in einer Zugangskontrollliste (220) aufgeführt ist, die mit der Femtozelle (105, 205) verbunden ist, die versucht, den drahtlosen Dienst bereitzustellen und
die Anforderung zu bewilligen, den drahtlosen Dienst der mobilen Einheit (110, 210) bereitzustellen, wenn die mobile Einheit (110, 210) in der Zugangskontrollliste (220) aufgeführt ist und der Eintrag der mobilen Einheit bestätigt worden ist von dem Benutzer der mobilen Einheit (110, 210).

10. Sichere Entität (125) nach Anspruch 8, wobei die sichere Entität (125) ein Femto-Netzwerk-Gateway ist.

11. Drahtloses Kommunikationssystem (200), umfassend:
Mindestens eine Femtozelle (205) zum Bereitstellen von drahtloser Konnektivität zu mindestens einer mobilen Einheit (210) und
eine sichere Entität (215) nach Anspruch 8, die verwendet wird zum Implementieren einer starken, netzwerkverstärkten Zugangskontrolle.

## Revendications

1. Procédé d'exploitation d'une femtocellule (105, 205) communiquant avec un réseau sécurisé (115), le procédé comprenant les étapes suivantes :
envoyer (305, 405) de la femtocellule (105, 205) à une entité sécurisée (125, 215) dans le réseau sécurisé (115), une demande de fourniture de connectivité sans fil à une unité mobile (110, 210) ; et
recevoir (315) la permission de fournir une connectivité sans fil à l'unité mobile (110, 210) lorsque les informations stockées dans l'entité sécurisée (125, 215) dans le réseau sécurisé (115) indiquent qu'un utilisateur de l'unité mobile (110, 210) a confirmé que la femtocellule (105, 205) est autorisée à fournir une connectivité sans fil à l'unité mobile (110, 210) ;
la demande de fourniture de connectivité sans fil à l'unité mobile (110, 210) comprend l'envoi d'une demande de modification d'une liste d'unités mobiles (220) associées à la femtocellule (105, 205) pour ajouter ou supprimer l'unité mobile (110, 210) ;
**caractérisé en ce que** la demande de fourniture de connectivité sans fil comprend les sous-étapes suivantes :
envoyer, à l'unité mobile (110, 210), une demande d'ajout de l'unité mobile (110, 210) à la liste d'unités mobiles (220) associées à la femtocellule (105, 205) ;
recevoir, de l'unité mobile (110, 210), des informations indiquant si l'unité mobile (110, 210) confirme l'ajout à la liste d'unités mobiles (220) associées à la femtocellule (105, 205) ; et
communiquer, à l'entité sécurisée (125, 215), les informations indiquant si l'unité mobile (110, 210) confirme l'ajout à la liste d'unités mobiles (220) associées à la femtocellule (105, 205) de sorte que la liste soit modifiée si l'utilisateur de l'unité mobile (110, 210) confirme l'ajout ou la suppression.

2. Procédé selon la revendication 1, dans lequel le procédé comprend en outre l'étape consistant à déterminer (325, 410) si la femtocellule (105, 205) est autorisée à fournir une connectivité sans fil à l'unité mobile (110, 210) sur la base des informations stockées dans l'entité sécurisée (125, 215) dans le réseau sécurisé et dans lequel la détermination (325, 410) du fait que la femtocellule (105, 205) est autorisée à fournir une connectivité sans fil à l'unité mobile (110, 210) comprend la détermination du fait que la femtocellule (105, 205) est autorisée à fournir une connectivité sans fil à l'unité mobile (110, 210) sur la base d'une liste d'unités mobiles (220) associées à la femtocellule (105, 205).

3. Procédé selon la revendication 2, comprenant les étapes suivantes :
modifier (320, 415) la liste d'unités mobiles (220) associées à la femtocellule (105, 205) pour ajouter ou supprimer l'unité mobile (110, 210) si l'utilisateur de l'unité mobile (110, 210) confirme l'ajout ou la suppression ; et
recevoir (410) une confirmation de l'ajout ou de la suppression en provenance de l'utilisateur de l'unité mobile (110, 210) via au moins un élément parmi l'unité mobile (110, 210), la femtocellule (105, 205) ou une interface (225) fournie par l'entité sécurisée (125, 215).

4. Procédé selon la revendication 1, comprenant en outre les étapes suivantes :
recevoir (305, 405) de la femtocellule (105, 205) la demande de modification des informations stockées dans l'entité sécurisée (125, 215) pour ajouter ou supprimer l'unité mobile (110, 210), la demande incluant un identifiant associé à la femtocellule (105, 205) ;
valider (310, 410) l'identifiant associé à la femtocellule (105, 205) ;
accepter (315, 415) la demande et modifier les informations stockées dans l'entité sécurisée (125, 215) lorsque l'identifiant est validé ; et
rejeter (330, 420) la demande et ne pas modifier les informations stockées dans l'entité sécurisée (125, 215) lorsque l'identifiant n'est pas validé.

5. Procédé selon la revendication 1, comprenant la réception, dans l'unité mobile (110, 210), d'informations indiquant une tentative d'ajout ou de suppression de l'unité mobile (110, 210) d'une liste d'unités mobiles (220) associées à la femtocellule (105, 205).

6. Procédé selon la revendication 5, dans lequel la communication des informations indiquant si la femtocellule (105, 205) est autorisée à fournir une connectivité sans fil à l'unité mobile (110, 210) comprend la communication des informations en réponse à la réception des informations indiquant la tentative d'ajout ou de suppression de l'unité mobile (110, 210) de la liste d'unités mobiles (220) associées à la femtocellule (105, 205) et dans lequel la communication des informations indiquant si la femtocellule (105, 205) est autorisée à fournir une connectivité sans fil à l'unité mobile (110, 210) comprend la communication d'informations secrètes connues uniquement de l'utilisateur et de l'entité sécurisée (125, 215).

7. Procédé selon la revendication 1, dans lequel la liste est une liste de contrôle d'accès et dans lequel le procédé comprend en outre les étapes suivantes :
déterminer (310) au niveau de l'entité sécurisée (125, 215) si l'unité mobile (110, 210) est répertoriée dans une entrée confirmée d'une liste de contrôle d'accès associée à la femtocellule qui tente de fournir la connectivité sans fil ;
accepter (315) au niveau de l'entité sécurisée (125, 215) la demande de fourniture d'une connectivité sans fil, si l'unité mobile (110, 210) est répertoriée dans la liste de contrôle d'accès et l'entrée a été confirmée par un utilisateur de l'unité mobile (110, 210) ;
tenter (320) par l'entité sécurisée (125, 215) de modifier la liste de contrôle d'accès pour permettre à la femtocellule (105, 205) émettant la demande de fournir une connectivité sans fil, si l'unité mobile (110, 210) n'est pas répertoriée dans la liste de contrôle d'accès et/ou si une entrée existante n'a pas été confirmée par l'utilisateur de l'unité mobile (110, 210) ;
poursuivre au niveau de l'entité sécurisée (125, 215) l'étape de détermination (310) du fait que l'unité mobile (110, 210) est dans la liste de contrôle d'accès ; et
rejeter (330) au niveau de l'entité sécurisée (125, 215) la demande de fourniture de connectivité sans fil, si l'étape de tentative (320) ne réussit pas (325).

8. Entité sécurisée (125, 215) destinée à être utilisée dans un réseau sécurisé (115), l'entité sécurisée (125, 215) étant adaptée pour
recevoir d'une femtocellule (105, 205) une demande de fourniture de connectivité sans fil à une unité mobile (110, 210) ; et
déterminer si la femtocellule (105, 205) est autorisée à fournir une connectivité sans fil à l'unité mobile (110, 210) sur la base d'informations stockées dans l'entité sécurisée (125, 215) dans le réseau sécurisé, lesdites informations ayant été confirmées par un utilisateur de l'unité mobile (110, 210) ;
la demande de fourniture de connectivité sans fil à l'unité mobile (110, 210) comprend l'envoi d'une demande de modification d'une liste d'unités mobiles (220) associées à la femtocellule (105, 205) pour ajouter ou supprimer l'unité mobile (110, 210) ;
**caractérisée en ce que** l'entité sécurisée (125, 215) est en outre adaptée pour :
envoyer, à l'unité mobile (110, 210), une demande d'ajout de l'unité mobile (110, 210) à la liste d'unités mobiles (220) associées à la femtocellule (105, 205) ; et
recevoir, de l'unité mobile (110, 210), des informations indiquant si l'unité mobile (110, 210) confirme l'ajout à la liste d'unités mobiles (220) associées à la femtocellule (105, 205) de sorte que la liste soit modifiée si l'utilisateur de l'unité mobile (110, 210) confirme l'ajout ou la suppression.

9. Entité sécurisée (125, 215) selon la revendication 8, l'entité sécurisée (125, 215) étant en outre adaptée pour
déterminer si l'unité mobile (110, 210) est répertoriée dans une entrée confirmée d'une liste de contrôle d'accès (220) associée à la femtocellule (105, 205) qui tente de fournir le service sans fil et
accepter la demande de fourniture de service sans fil à l'unité mobile (110, 210), si l'unité mobile (110, 210) est répertoriée dans la liste de contrôle d'accès (220) et l'entrée de l'unité mobile a été confirmée par l'utilisateur de l'unité mobile (110, 210).

10. Entité sécurisée (125) selon la revendication 8, l'entité sécurisée (125) étant une passerelle de réseau femto.

11. Système de communication sans fil (200) comprenant :
au moins une femtocellule (205) destinée à fournir une connectivité sans fil à au moins une unité mobile (210) et
une entité sécurisée (215) selon la revendication 8 utilisée pour mettre en oeuvre un contrôle d'accès renforcé exécuté par le réseau.
